# EUROPEAN PATENT APPLICATION

(11) **EP 4 668 383 A1**
(43) Date of publication of application: **24.12.2025**
(21) Application number: 24836359.0
(22) Date of filing: 04.07.2024
(51) Int. Cl.: H01M 10/04, H01M 50/105, B29C 65/18, B29C 65/00, H01M 50/183, B29L 31/00

(54) **POUCH-TYPE SECONDARY BATTERY AND MANUFACTURING METHOD THEREFOR**

(30) Priority: 05.07.2023 KR 20230087118
(71) Applicant: LG Energy Solution, Ltd., Seoul 07335 (KR)
(72) Inventor: JUNG, Woo Jung, Daejeon 34122 (KR)
(74) Representative: Goddar, Heinz J.
(86) International application number: PCT/KR2024/009490
(87) International publication number: WO 2025/009912

(57) **Abstract**

According to one example of the present invention, a pouch-type secondary battery manufacturing method, which is characterized in that the method comprises a forming step of sinking a partial region of a pouch to form an accommodation portion in which an electrode assembly is seated; an introduction step of seating the electrode assembly within the accommodation portion; and a sealing step of pressurizing a sealing region spaced apart from the edge of the accommodation portion by a predetermined distance at the outer side of the accommodation portion to form a sealing portion between an upper pouch and a lower pouch as laminated, and at least some sections of the sealing step are performed in a state where an up-and-down gap is maintained between the upper and lower pouches laminated in a temporary attachment region located between the edge of the accommodation portion and the sealing region, and a pouch-type secondary battery manufactured therethrough may be provided.

## Description

### Technical Field

The present invention relates to a pouch-type secondary battery and a manufacturing method thereof, and more specifically, relates to a pouch-type secondary battery and a manufacturing method thereof capable of effectively excluding formation of a temporary attachment portion in a temporary attachment region.

This application claims the benefit of priority based on Korean Patent Application No. 10-2023-0087118 dated July 5, 2023, the disclosure of which is incorporated herein by reference in its entirety

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 to 37V) unit cell among existing secondary batteries, and excellent energy densities, so that they can have characteristics optimized for mobile devices.

Lithium secondary batteries can be manufactured as pouch-type secondary batteries by encapsulating a battery cell or an electrode assembly with a pouch which is an aluminum encapsulation material.

The pouch-type secondary battery may comprise an electrode assembly accommodated in a pouch as an encapsulating material, a lead in which electrode tabs of electrodes provided in the electrode assembly are electrically connected to be drawn out to the outside of the pouch, and an insulating film electrically insulating the lead. Particularly, the pouch may perform a function of sealing the electrode assembly accommodated therein by heat-fusing the inner surface of the pouch with the insulating film provided on the lead of the electrode assembly, or directly heat-fusing the inner surface of the pouch with the inner surface of the pouch to form a sealing portion. The insulating film is generally a polypropylene (PP) film.

Of course, in the pouch, insulating films are coated on upper and lower surfaces of a metal sheet, especially an aluminum sheet, and the insulating films facing each other upon heat-fusion are heat-fused to form a sealing portion. The insulating film of the pouch, especially the insulating film on the inner surface, is generally a polypropylene film.

The pouch sealing performs a function of sealing a certain space accommodating an electrolyte inside the pouch. When the electrode assembly is repeatedly charged and discharged, gas is generated to increase the pressure inside the pouch, and for this reason, the pouch sealing requires high strength.

Meanwhile, upon sealing the pouch by heat fusion, the polypropylene (PP) film is melted and spread to be bonded. The polypropylene film does not only bond the pouch, but also separates a metal layer, such as aluminum, of the pouch from the electrolyte, thereby preventing corrosion of the metal layer, and preventing current from flowing into the pouch to increase resistance.

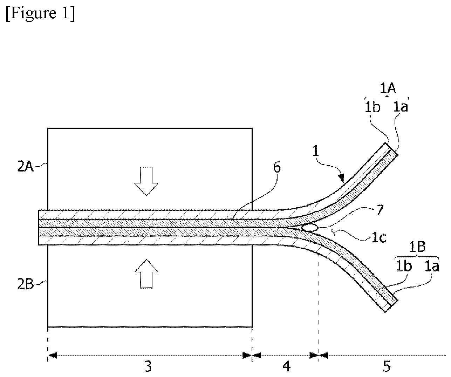

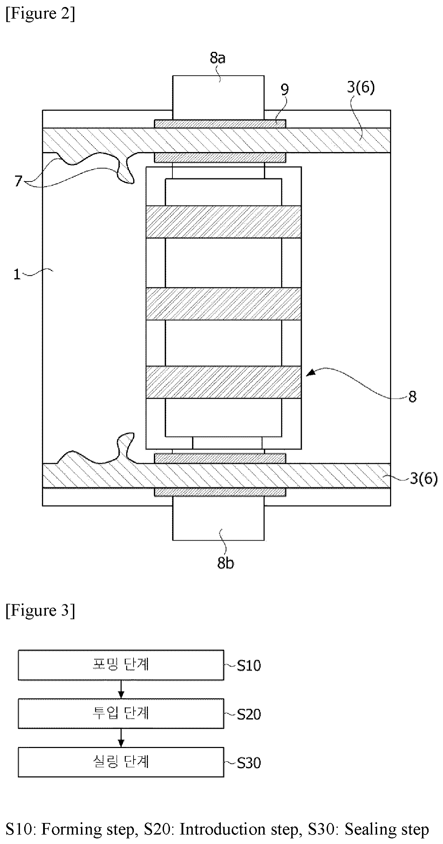

Figures 1 and 2 illustrate a sealing method in a general pouch-type secondary battery and formation of a temporary attachment portion in a temporary attachment region.

The pouch (1) is formed by including an inner insulating coating layer (1a) and a core layer (1b). The core layer (1b) comprises a core layer made of a metal material, which may generally be formed of an aluminum material. The core layer may further comprise an outer insulating coating layer.

The pouch sealing between the pouch and the pouch is performed by heat-pressurizing the pouch through a sealing tool (2). Specifically, the laminated upper and lower pouches (1A, 1B) or pouch cases are heat-fused up and down through a upper sealing tool (2A) and a lower sealing tool (2B), where the region corresponding to the sealing tools may be referred to as a sealing region (3). That is, the inner insulating coating layer (1a) in the sealing region is melted by heat pressurization to form a sealing portion (6). In other words, the facing inner insulating coating layers (1a) are melted, and then solidified to form the sealing portion (6). This sealing is performed in a state where the electrode assembly (8) is seated inside, and an accommodation portion (1c) where the electrode assembly (8) is seated is formed in the pouch.

A predetermined temporary attachment region (4) is provided between a cell region (5) in which the electrode assembly (8) is provided and the sealing region (3). Specifically, a predetermined temporary attachment region (4) is provided between an edge of the accommodation portion and the sealing region (3), where an unintended sealing portion, i.e., a temporary attachment portion (7), may be formed in the temporary attachment region. That is, the insulating material melted in the sealing region (3) moves to the temporary attachment region (4) to be bonded to each other, whereby the temporary attachment portion (7) may be formed.

Unlike the sealing portion (6) formed by pressurization in the sealing region, the temporary attachment portion (7) in the temporary attachment region (4) has a relatively large bonding thickness of the insulating material, so that it has weak high-temperature durability. In addition, the internal pressure of the pouch may increase due to a subsequent activation process, and the like, where if the bonding of the temporary attachment portion is broken, the core lay er (1b) of the metal material may be exposed to the electrolyte filled inside the pouch, resulting in poor insulation.

As illustrated in Figure 2, a lead (8a, 8b) may be provided at both ends or one end of the length direction of the electrode assembly (8). The lead (8a, 8b) made of a conductive material is provided so that it penetrates the pouch (1) to be exposed to the outside. The insulating film (9) is interposed between the upper and lower portions of the lead (8a, 8b) and the pouch, and the sealing region (3) and the sealing portion (6) are formed across the insulating film (9). Here, the sealing for the portion through which the lead (8a, 8b) penetrates may be referred to as top sealing. Then, sealing parallel to the longitudinal direction of the electrode assembly (8) corresponding to the top sealing may be referred to as side sealing.

The problem due to the occurrence of the temporary attachment portion (7) may also occur in the side sealing, but may be more pronounced in the top sealing. This is because in the side sealing, one sealing portion is generated by heat fusion between the pouches, but in the top sealing, a sealing portion between the pouches, and two upper and lower sealing portions by heat fusion between the pouch and the insulating film are generated. In the case of the top sealing, the thicknesses at the sealing portion where the insulating film (9) is interposed and the sealing portion where the insulating film (9) is not interposed are different due to the thicknesses of the lead and the upper and lower insulating films. As a result, the difficulty level of top sealing is higher than the difficulty level of side sealing. In addition, it can be regraded that the possibility of forming a temporary attachment portion is higher in the top sealing.

Therefore, it is necessary to provide a manufacturing method and manufacturing device of a secondary battery, capable of effectively preventing problems caused by the temporary attachment portion (7) in the temporary attachment region (4) that can be generated during the process of the pouch sealing, especially, the top sealing, and a secondary battery manufactured using the same.

### Disclosure

### Technical Problem

It is an object of the present invention to solve problems of conventional pouch-type secondary batteries.

Through one example of the present invention, it is possible to provide a manufacturing method and a manufacturing device of a secondary battery, capable of effectively excluding formation of a temporary attachment portion in a temporary attachment region easily and simply, and a secondary battery manufactured using the same.

Through one example of the present invention, it is possible to provide a manufacturing method and a manufacturing device of a secondary battery, which can be applied within a conventional manufacturing process without adding any additional process to a conventional secondary battery manufacturing process, and a secondary battery manufactured using the same.

Through one example of the present invention, it is possible to provide a manufacturing method and a manufacturing device of a secondary battery, capable of effectively preventing formation of a temporary attachment portion in a lead region through which a lead of an electrode assembly penetrates, particularly, in a temporary attachment region located on both sides of the lead region, and a secondary battery manufactured using the same.

### Technical Solution

In order to achieve the above-described objects, according to one example of the present invention, a pouch-type secondary battery manufacturing method may be provided, which is characterized in that the method comprises a forming step of sinking a partial region of a pouch to form an accommodation portion in which an electrode assembly is seated; an introduction step of seating the electrode assembly within the accommodation portion; and a sealing step of pressurizing a sealing region spaced apart from the edge of the accommodation portion by a predetermined distance at the outer side of the accommodation portion to form a sealing portion between an upper pouch and a lower pouch as laminated, and at least some sections of the sealing step are performed in a state where an up-and-down gap is maintained between the upper pouch and the lower pouch laminated in a temporary attachment region located between the edge of the accommodation portion and the sealing region.

The sealing step may comprise top sealing for sealing a surface where a lead of the electrode assembly penetrates the pouch, and side sealing for sealing a surface where the lead of the electrode assembly does not penetrate the pouch.

In the side sealing, the sealing portion may be formed by direct heat fusion between the upper pouch and the lower pouch. In the top sealing, the lead is interposed between the upper pouch and the lower pouch, a sealing portion may be formed directly between the upper pouch and the lower pouch only in some regions.

For formation and maintenance of the up-and-down gap, it may comprise a suction step of sucking the upper pouch to the upside and sucking the lower pouch to the downside in the temporary attachment region through a suction nozzle. That is, the sealing step may comprise a suction step.

It is preferable that the suction step is performed after pressurization is started through a sealing block in the sealing step.

The suction step may be performed before the pressurization is completed, or may be performed until a predetermined time after the pressurization is completed.

It is preferable that the suction step through the suction nozzle is excluded in a lead region of the pouch where the lead of the electrode assembly is seated. Particularly, it is preferable that the suction step in the temporary attachment region within the lead region is excluded. This is because an insulating film or a protective tape is interposed between the lead and the pouch, where bonding of the protective tape may be damaged by this suction.

It is preferable that the suction step is performed in the temporary attachment region located on both sides of the lead region. Particularly, it is preferable that the suction is performed at a location outside of both sides of the protective tape. This is because direct heat fusion between the upper pouch and the lower pouch is performed in this region upon the top sealing.

The up-and-down gap may be formed by a step portion formed with a sinking depth s maller than that of the accommodation portion in the temporary attachment region to have a step with the accommodation portion.

In the forming step, the step portion may be formed together with the accommodation portion.

In the forming step, the accommodation portion and the step portion may be formed simultaneously, or may be formed sequentially.

It is preferable that the step portion is formed in a lead region of the pouch where a lead of the electrode assembly is seated.

It is preferable that the step portion is formed in the temporary attachment region located on both sides of a lead region.

In order to achieve the above-described objects, according to one example of the present invention, a pouch-type secondary battery may be provided, which is characterized in that the pouch-type secondary battery comprises a pouch case having a metal layer and an insulating coating layer formed on the lower and upper surfaces of the metal layer, and having an accommodation portion in which some regions are sunken; and an electrode assembly seated in the accommodation portion, and having a lead exposed to the outside of the pouch case when a sealing portion is formed by heat fusion by pressurizing a sealing region of the pouch cases overlapped up and down, and when the sealing portion is formed, formation of a temporary attachment portion is limited by an up-and-down gap formed between the pouch cases overlapped up and down in a temporary attachment region located between the edge of the accommodation portion and the sealing region. That is, the temporary attachment region of an upper pouch is located above the sealing region, and the temporary attachment region of a lower pouch is located below the sealing region, by the up-and-down gap. Due to this positional difference, the formation of the temporary attachment portion connecting the upper pouch and the lower pouch in the temporary attachment region may be significantly reduced.

The up-and-down gap may be formed by sucking an upper pouch case to the upside and sucking a lower pouch case to the downside in the temporary attachment region through suction nozzles.

In a lead region of the pouch case where the lead is seated, the suction through the suction nozzle may be excluded.

It is preferable that the suction through the suction nozzle is performed in the temporary attachment region located on both sides of the lead region.

It is preferable that the up-and-down gap is formed by a step portion formed with a sinking depth smaller than that of the accommodation portion in the temporary attachment region to have a step with the accommodation portion.

The step portion is formed in the forming step of the pouch, and is formed by modifying the shape of the pouch like the accommodation portion. Therefore, in the final pouch-type secondary battery, the step portion and the accommodation portion may be distinguished from other portions in terms of shape.

It is preferable that the step portion is provided in a lead region of the pouch case where the lead of the electrode assembly is seated.

It is preferable that a width of the step portion in the lead region is larger than the width of one side of the lead of the electrode assembly. The step portion may be formed parallel to the sealing region in the lead region.

It is preferable that the step portion is formed in the temporary attachment region _{loc}ated on both sides of a lead region of the pouch case where the lead of the electrode assembly is seated.

In a lead region of the pouch case where the lead of the electrode assembly is seated, the formation of the step portion may be excluded.

### Advantageous Effects

Through one example of the present invention, it is intended to provide a manufacturing method and a manufacturing device of a secondary battery, capable of effectively excluding formation of a temporary attachment portion in a temporary attachment region easily and simply, and a secondary battery manufactured using the same.

Through one example of the present invention, it is intended to provide a manufacturing method and a manufacturing device of a secondary battery, which can be applied within a conventional manufacturing process without adding any additional process to a conventional secondary battery manufacturing process, and a secondary battery manufactured using the same.

Through one example of the present invention, it is intended to provide a manufacturing method and a manufacturing device of a secondary battery, capable of effectively preventing formation of a temporary attachment portion in a lead region through which a lead of an electrode assembly penetrates, particularly, in a temporary attachment region located on both sides of the lead region, and a secondary battery manufactured using the same.

### Description of Drawings

Figure 1 illustrates an appearance in which a sealing portion and an attachment portion are formed in a conventional pouch sealing step,
Figure 2 illustrates an appearance in which an attachment portion is formed in a conventional pouch,
Figure 3 illustrates a flow of a pouch-type secondary battery manufacturing method according to one example of the present invention,
Figure 4 illustrates an appearance of pouch sealing according to one example of the present invention,
Figure 5 illustrates an appearance of forming a step portion in a pouch forming process,
Figure 6 illustrates an appearance in which a step portion is formed in a lead region in top sealing,
Figure 7 illustrates an appearance in which a step portion is formed through a suction nozzle in a sealing process, and
Figure 8 illustrates an appearance in which a step portion is formed at both sides of a lead region in top sealing.

### Mode for Invention

Hereinafter, the sealing device and the sealing method according to one example of the present invention will be described in more detail with reference to the attached drawings.

First, a manufacturing method of a pouch-type secondary battery will be described in more detail with reference to Figure 3.

A packaging process of a pouch-type secondary battery may generally comprise processes of manufacturing an electrode assembly, forming a pouch in which the electrode assembly is accommodated, introducing the electrode assembly into the pouch, and sealing the pouch.

The forming step (S10) may be a process of forming an accommodation portion in which the electrode assembly is accommodated by sinking a partial region of the pouch.

The introduction step (S20) may be a process of introducing the pre-manufactured electrode assembly into the accommodation portion of the pouch to be seated.

After the introduction step (S20) is completed, a sealing step (S30) of sealing the pouch may be performed. The sealing step may comprise a top sealing process of sealing a surface where the lead penetrates the pouch and a side sealing process of sealing a surface where the lead does not penetrate the pouch.

In the case of a quadrangular secondary battery, one of the two surfaces where the lead does not penetrate the pouch may be formed by folding a continuous pouch. Therefore, the side sealing process in this portion is unnecessary. The side sealing process on the other side may be performed in a vacuum state after the subsequent electrolyte injection process and degassing process.

In the sealing step (S30), the sealing region of the pouch is pressurized through a sealing tool to form a sealing portion between the upper and lower pouches that are laminated or overlapped.

It is preferable that at least some sections of the sealing step (S30) are performed in a state where an up-and-down gap is maintained between the pouches laminated up and down.

The up-and-down gap may be intentionally formed and maintained in the sealing step (S30). In addition, the up-and-down gap may be formed in the forming step (S10), and then maintained in the sealing step (S30). That is, in any case, it is preferable that at least some sections of the sealing step (S30) are performed in a state where the up-and-down gap is maintained.

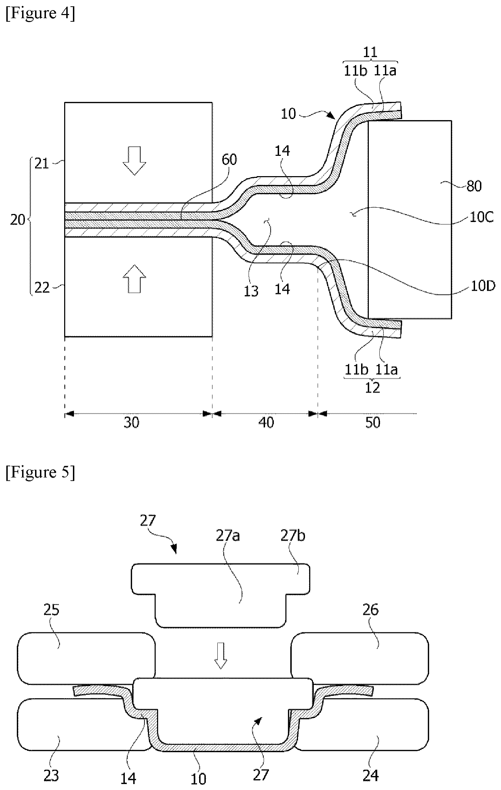

Figure 4 illustrates concepts of a pouch sealing structure and a pouch sealing method according to one example of the present invention.

As shown, the pouch sealing structure and method of the present example may be said to be like the conventional pouch sealing structure and method shown in Figure 1.

In a state where the upper pouch (11) and the lower pouch (12) are overlapped, a sealing portion (60) is formed in the sealing region (30) by the sealing tool (20), that is, the upper sealing block (21) and the lower sealing block (22). In this instance, the electrode assembly (80) is positioned in the accommodation portion (10C) between the upper pouch (11) and the lower pouch (12).

The accommodation portion (10C) is formed by forming a pouch in the form of a flat sheet. More specifically, the accommodation portion (10C), for which the electrode assembly (80) is introduced and seated, is formed by sinking a partial region of the pouch (11, 12).

The accommodation portion (10C) may also be formed in only any one of the upper pouch (11) and the lower pouch (12), and may also be formed in both pouches. Accordingly, the sinking depth of the accommodation portion (10C) may vary. The upper pouch (11) and the lower pouch (12) may be in a separate sheet shape, and may also be in the form that one sheet is folded and overlapped up and down. In the latter case, the side sealing at the folded portion is unnecessary.

Since the accommodation portion (10C) is formed by being sunken in a plane, a boundary between the plane and the sunken portion, that is, an accommodation portion edge (10D), may be formed. The accommodation portion edge (10D) may be formed in a shape that the pouch is gently bent.

A temporary attachment region (40) is provided between the sealing region (30) and the cell region (50). The temporary attachment region (40) may be regarded as a safety distance for protecting the electrode assembly (80) by preventing impact, heat, and pressure from being transmitted to the cell region (50) upon sealing in the sealing region (30).

The pouch (11, 12) may comprise an inner insulating coating layer (11a) and a core layer (11b). When forming the sealing portion (60) in the sealing region (30) through the sealing tool (20), it is common that a part of the insulating material melted in the inner insulating coating layer (11a) moves to the temporary attachment region (40) to form the temporary attachment portion. As shown in Figure 1, this is because according to the conventional sealing method and sealing structure, the temporary attachment region (4) as well as the sealing region (3) are in a state where the upper pouch (1A) and the lower pouch (1B) are overlapped up and down, and the molten insulating material can move to the temporary attachment region (4) by easily moving while overcoming the self-weight of the upper pouch (1A). That is, the molten insulating material squeezes and moves between the upper pouch (1 A) and the lower pouch (1B) overlapped in the temporary attachment region (4), whereby the temporary attachment portion may be formed.

The present example is characterized by intentionally forming an up-and-down gap (13) between the upper pouch (11) and the lower pouch (12) in the temporary attachment region (40). The height of the up-and-down gap (13) may be formed to be significantly larger than the thicknesses of the upper pouch (11) and the lower pouch (12). Of course, it is preferable that the height of the up-and-down gap (13) is formed smaller than the up-and-down height in the accommodation portion.

Specifically, the height of the up-and-down gap is formed to be larger than the sum of the thicknesses of the upper pouch and the lower pouch, and it is preferable that the height of the up-and-down gap is preferably two or more times the sum of the thicknesses of the upper pouch and the lower pouch.

The up-and-down gap (13) may be formed through a step portion (14) formed between the sealing region (30) and the cell region (50). The step portion (14) may be formed in the temporary attachment region (40). That is, the sealing region (30) is not connected to the cell region (50) through a single inclined surface, but the sealing region (30) is connected to the cell region (50) through two inclined surfaces by the step portion (14). It can be regarded that the step portion (14) having a horizontal plane is interposed between the two inclined surfaces.

In the case where the up-and-down gap (13) is intentionally formed in the temporary attachment region (40), the molten insulating material does not need to move while overcoming the self-weight of the upper pouch (11) in the temporary attachment region (40). Particularly, the molten insulating material moving to the up-and-down gap (13) is mostly introduced into the lower pouch (12) by its self-weight. This means that the molten insulating material mostly moves along the inner surface of the lower pouch (12) and solidifies, and the solidified insulating material is separated from the inner surface of the upper pouch (11) due to the up-and-down gap (13). That is, the solidified insulating material generally solidifies while connecting the inner surface of the lower pouch and the inner surface of the upper pouch, thereby forming the temporary attachment portion, but according to the present example, the formation of such a temporary attachment portion may be excluded due to the up-and-down gap (13).

The up-and-down gap (13) may be formed or maintained in various forms. In other words, the step portion (14) may be formed or maintained in various forms. In any case, it is preferable that a sufficient length is secured, in which the step portion may be formed between the sealing region (30) and the cell region (50).

Figure 5 illustrates one example for forming and maintaining the up-and-down gap (13).

As illustrated, the up-and-down gap may be formed through forming of the pouch (10). That is, the up-and-down gap may be formed in advance in the forming step (S10). The preformed up-and-down gap may be maintained in the sealing step (S30).

As described above, the accommodation portion (10C) of the pouch (10) may be formed by sinking a partial region of a flat pouch through forming. Similarly, the up-and-down gap may be formed by sinking a partial region of a flat pouch in the temporary attachment region adjacent to the accommodation portion (10C). In this instance, it is preferable that the sinking depth for the up-and-down gap is smaller than the sinking depth of the accommodation portion. That is, the step portion (14) may be formed through forming in the temporary attachment region (40).

Figure 5 illustrates one example of simultaneously forming the accommodation portion (10C), and the step portion (14) for forming the up-and-down gap (13) by single forming.

A flat sheet-shaped pouch (10) is seated on both dies (23, 24) and fixed by both strippers (25, 26). The punch (27) pressurizes the pouch (10) to form a sunken portion corresponding to the shape of the punch (27). That is, the sunken portion formed at this time can be called the accommodation portion (10C).

The accommodation portion and the step portion may be formed simultaneously by the punch (27) composed of a central pressurizing portion (27a) corresponding to the accommodation portion (10C) and an edge pressurizing portion (27b) corresponding to the step portion (14).

Of course, the accommodation portion and the step portion may be formed sequentially through multiple forming. For example, the accommodation portion (10C) may be formed first by forming, and then the step portion (14) may be formed by forming at the edge portion of the accommodation portion (10C). In addition, as one example, the forming for overall sinking may be performed to a sinking depth corresponding to the sinking depth of the up-and-down gap, and then the forming may be performed only on the central portion to a sinking depth corresponding to the depth of the accommodation portion. That is, the step portion may be formed by shallowly sinking a wide region, and then the accommodation portion may be formed by deeply sinking a narrow region in the central portion of the wide region.

In any case, according to the present example, the step portion (14) in the temporary attachment region may be formed in advance through formation of the pouch during the pouch forming process. That is, the up-and-down gap (13) may be formed inside the pouch through the step portion (14) formed in the pouch.

The step portion (14) may be formed in both the upper pouch (11) and the lower pouch (12), and may also be formed in only one pouch. If the step portion (14) is formed in both the upper pouch (11) and the lower pouch (12), a sufficient up-and-down separation gap may be formed even if the sinking depth is small.

Meanwhile, the shape of the electrode assembly (80) is generally a quadrangular shape, so that the shape of the accommodation portion (10C) is also generally formed in a quadrangular shape corresponding thereto. The electrode assembly (80) is provided with two leads exposed to the outside of the pouches (11, 12), where the two leads may protrude in one direction, or the two leads may protrude in opposite directions, respectively. Based on the four sides of the electrode assembly (80), the sealing of the parts without the lead may be called side sealing, and the sealing of the parts with the lead may be called top sealing.

In the case where the upper and lower pouches separated from each other are sealed, there may be two side sealing points, and in the case where a single pouch is overlapped and sealed, there may also be one side sealing point. However, in either case, there may be two top sealing points. Of course, in the case where two leads protrude in the same direction, there may also be one top sealing point.

The up-and-down gap (13) formed by the forming may be formed on all sides where side sealing and top sealing are performed, and particularly, may also be formed only on the sides where top sealing is performed.

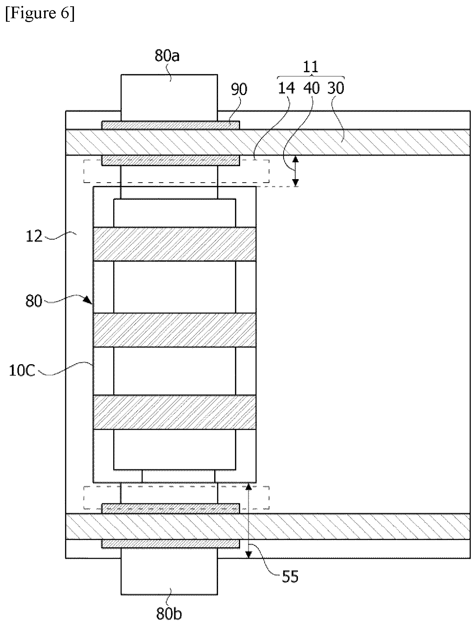

Figure 6 illustrates one example where an up-and-down gap (13) is formed for top sealing.

For convenience of explanation, Figure 6 illustrates a state where the upper pouch is removed after top sealing and the electrode assembly (80) is accommodated in the lower pouch (12).

In the side sealing, the upper pouch and the lower pouch are directly sealed by heat fusion, and in the top sealing, a lead (80a, 80b) and an insulating film (90) are interposed between the upper pouch and the lower pouch. The insulating film is in a state of being very firmly bonded to the lead, and the sealing region (30) may be formed across the insulating film.

In the top sealing, like the side sealing, the sealing region (30) is formed in the pouch, and it is preferable that a temporary attachment region (40) is provided at the edge of the accommodation portion, that is, between the cell region (50) and the sealing region (30). At this time, the lead (80a, 80b) may protrude from the accommodation portion (10C) through the temporary attachment region (40) and the sealing region (30) to the outside of the pouch (12). Therefore, in the top sealing, the region where the lead penetrates the pouch, including the temporary attachment region (40) and the sealing region (30), may be referred to as a lead region (55).

In the sealing region (30) in the top sealing, a sealing portion is formed between the lower pouch (12), the insulating film (90), the lead (80a, 80b), the insulating film (90), and the upper pouch (11). Then, in the temporary attachment region (40), a temporary attachment portion between the lower pouch (12) and the insulating film (90), a temporary attachment portion between the lower insulating film (90) and the lead (80a, 80b), a temporary attachment portion between the upper insulating film (90) and the lead (80a, 80b), and a temporary attachment portion between the insulating film (90) and the upper pouch (11) may be formed.

Therefore, the number of sealing portions formed in the sealing region (30) and the number of temporary attachment portions formed in the temporary attachment region in the top sealing may be said to be greater than that in the side sealing. Therefore, it is preferable that the up-and-down gap is formed by forming the step portion (14) in the temporary attachment region (40) in the lead region (55).

It is preferable that the width of the step portion (14) is larger than the width of the lead (80a, 80b). In addition, it is preferable that the width of the step portion (140) is larger than the width of one side of the electrode assembly on which the lead (80a, 80b) is provided. Particularly, it is preferable that the width of the step portion (140) is larger than the width of the insulating film (90), as shown in Figure 6.

Here, the step portion (140) may be further extended to both sides of the insulating film (90). As one example, the step portion (140) may be formed to have the same width as the sealing region (30) where the top sealing is performed.

The step portion (14) formed on both sides wider than the width of the accommodation portion (10C) is not connected to the accommodation portion (10C). The step portion (14) included in the width range of the accommodation portion (10C) is formed in a two-stage stepwise manner between the sealing region (30) and the accommodation portion (10C). On the other hand, the step portion (14) formed on both sides wider than the width of the accommodation portion (10C) may be formed in a one-stage stepwise manner.

Meanwhile, the insulating film (90) provided in the lead region (55) may be provided to penetrate the sealing region (30) from front to back and from side to side. That is, a part of the insulating film (90) is provided on the outer side of the sealing region (30) and a part thereof is provided on the inner side of the sealing region (30). Therefore, it is preferable that a part of the insulating film (90) is located on the step portion (14) formed in the lead region (55). Furthermore, it is preferable that the height of the up-and-down gap formed by the step portion (14) is greater than the height of the leads (80a, 80b). Therefore, the lead (80a, 80b) is directly heat-fused with the pouch (11, 12) in the lead region (55) through the step portion (14) or the up-and-down gap, so that the sealing portion is not formed. This means that no temporary attachment portion is formed between the lead (80a, 80b) and the pouch (11, 12) in the lead region (55).

As shown in Figure 6, it is preferable that the width of the insulating film (90) is larger than the width of the lead (80a, 80b) to cover the entire lead (80a, 80b). However, it is preferably that the width of the insulating film (90) is smaller than the width of one side of the electrode assembly (80) provided with the lead (80a, 80b). Therefore, even in the top sealing, the sealing portion may be formed by direct heat fusion between the pouches in the region away from both ends of the insulating film (90). For this reason, the temporary attachment portion may also occur. Therefore, it is preferable that in the temporary attachment region (40) on both sides of the lead region (55), the up-and-down gap by the step portion (14) is formed to exclude the temporary attachment portion formation in advance.

Particularly, it is preferable that the width of the step portion (14) in the lead region (55) is larger than the width of one side of the electrode assembly (80). That is, it is preferable that the step portion (14) in the lead region (55) extends further from both ends of the electrode assembly (80) to both sides, whereby it is also formed in the temporary attachment region (40).

Meanwhile, in the temporary attachment region within the lead region (55), especially in the region covered by the insulating film (90), the insulating film (90) is interposed, so that the up-and-down gap by the step portion (14) may not be formed. This is because it can be sufficiently prevented from forming the temporary attachment portion between the pouch and the lead due to the insulating film (90).

However, to facilitate the step portion (14) through forming, it may be preferable to form a continuous step portion (14) up to not only the lead region (55) but also the temporary attachment region (40) on both sides.

As described above, the up-and-down gap (13) between the upper pouch (11) and the lower pouch (12) may be formed by means of the step portion (14) through the forming, and may also be formed by means of the suction nozzles (101, 102).

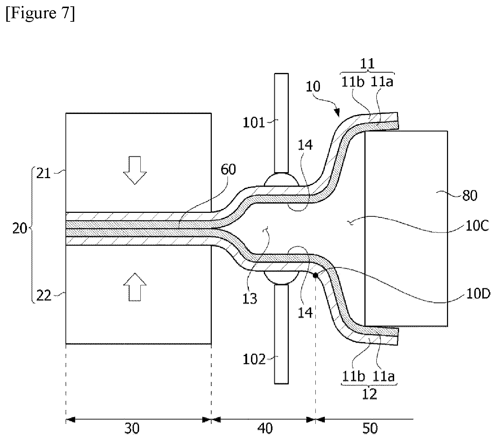

As shown in Figure 7, when forming the sealing portion (60) through the sealing tool (20), a part of the upper pouch (11) may be sucked upward and a part of the lower pouch (12) may be sucked downward, through suction nozzles (101, 102).

Particularly, in the temporary attachment region (40) located between the sealing region (30) and the cell region (50), the upper pouch may be pulled upward through the upper suction nozzle (101), and the lower pouch may be pulled downward through the lower suction nozzle (102).

When the upper pouch (11) and the lower pouch (12) are vertically moved through the suction nozzles (101, 102), the upper pouch (11) and the lower pouch (12) in the sealing region (30) may also be vertically moved. Therefore, an adsorption time point of the pouch through the suction nozzle may be important.

According to the present example, it is preferable that the suction or adsorption and the vertical movement of the pouch through the suction nozzle are performed after the pressurization is started through the sealing blocks (21, 22). That is, when the upper pouch (11) and the lower pouch (12) are pressurized to come into close contact with each other in the sealing region (30), the sealing portion (60) may be smoothly formed even if the suction is performed in the temporary attachment region (40).

In addition, when the suction is completed, the upper pouch (11) and the lower pouch (12) tend to return to their original positions, that is, the shape in which both are overlapped. Therefore, it is preferable that the suction is maintained for a predetermined time after the pressurization of the sealing block (21, 22) is completed. That is, it is preferable that the up-and-down gap (13) is maintained for a predetermined time after the pressurization is completed. This can be said to provide a time margin for which the melted insulating material after heat pressurization can be sufficiently cured without forming the temporary attachment portion after flowing into the temporary attachment region (40).

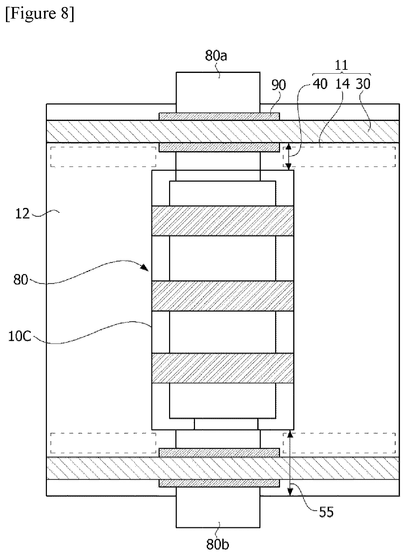

Figure 8 illustrates a region where an up-and-down gap is formed through suction nozzles (101, 102).

As illustrated, the formation of the up-and-down gap through the suction nozzle (101, 102) may be applied to the top sealing. Particularly, the up-and-down gap may be formed in the temporary attachment region (40) near the sealing region (30).

The up-and-down gap (13) may not be formed in the above-described lead region (55). That is, the up-and-down gap (13) may be formed only in the region where the upper pouch (11) and the lower pouch (12) are directly fused.

The up-and-down gap (13) may be formed as the suction nozzles (101, 102) adsorb the surfaces of the upper pouch (11) and the lower pouch (12) to vertically move the surfaces. To this end, it is preferable that the suction nozzles (101, 102) must move vertically to approach the upper pouch (11) and the lower pouch (12), and vertically move in the opposite directions after adsorption.

For the top sealing, the sealing blocks (21, 22) may move vertically. Then, the sealing blocks (21, 22) perform the sealing by coming into close contact with the surfaces of the upper pouch (11) and the lower pouch (12). Therefore, the level of the sealing blocks (21, 22) upon the top sealing may be the same as the level of the suction nozzles (101, 102). In other words, the level of the sealing block (21, 22) in the sealing region (30) upon the top sealing and the level of the suction nozzle (101, 102) in the temporary attachment region (40) may be the same. For this reason, the vertical movement of the sealing blocks (21, 22) and the vertical movement of the suction nozzles (101, 102) upon the top sealing may be interlocked with each other.

When the heat fusion starts through the sealing blocks (21, 22), the sealing blocks (21, 22) move further by a predetermined distance to pressurize the pouches (11, 12). At this time, the suction nozzles (101, 102) may adsorb the pouches (11, 12) to move by a predetermined distance in the direction where the up-and-down gap (13) is formed, that is, the direction opposite to the sealing blocks (21, 22). That is, it is preferable that as the heat fusion progresses, the suction nozzles (101, 102) adsorb the pouches (11, 12) to move in the direction where the up-and-down gap (13) is formed.

In order that after the heat fusion starts, the insulating material is melted to move to the temporary attachment region (40), a predetermined time may be required. Therefore, the up-and-down gap (13) is formed through the suction nozzles (101, 102) before the predetermined time. When the melted insulating material flows to the temporary attachment region (40) after the up-and-down gap (13) is formed, the melted insulating material may be separated up and down by gravity and surface tension. That is, the formation of the temporary attachment portion in the temporary attachment region (40) may be excluded.

The up-and-down gap (13) in the present example may be formed on the left and right sides of the lead region (55) without being formed in the lead region (55). That is, it is preferable that in the top sealing, the up-and-down gap (13) is formed only in the region where the upper pouch (11) and the lower pouch (12) are directly heat-fused.

The protective tape or insulating film (90) is interposed in the lead region (55). That is, the insulating film (90) is attached to the upper and lower surfaces of the lead for protecting the leads (80a, 80b) and imparting insulation. If the adsorption is performed through the suction nozzles (101, 102) in the lead region (55), the bonding between the lead and the insulating film is damaged, whereby the insulation performance may be lowered. Therefore, it is preferable that the up-and-down gap (13) by adsorption is excluded in the lead region (55).

Through the above-described examples, the generation of the temporary attachment portion in the top sealing may be excluded by means of the up-and-down gap in the temporary attachment region. Of course, the generation of the temporary attachment portion may also be excluded by means of the up-and-down gap in the side sealing.

### Industrial Applicability

It is described in the Detailed Description of Invention.

## Claims

1. A pouch-type secondary battery manufacturing method, **characterized in that** the pouch-type secondary battery manufacturing method comprises:
a forming step of sinking a partial region of a pouch to form an accommodation portion in which an electrode assembly is seated;
an introduction step of seating the electrode assembly within the accommodation portion; and
a sealing step of pressurizing a sealing region spaced apart from the edge of the accommodation portion by a predetermined distance at the outer side of the accommodation portion to form a sealing portion between an upper pouch and a lower pouch as laminated, and
at least some sections of the sealing step are performed in a state where an up-and-down gap is maintained between the upper pouch and the lower pouch laminated in a temporary attachment region located between the edge of the accommodation portion and the sealing region.

2. The pouch-type secondary battery manufacturing method according to claim 1,
**characterized by** comprising a suction step of sucking the upper pouch to the upside and sucking the lower pouch to the downside in the temporary attachment region through suction nozzles for formation and maintenance of the up-and-down gap.

3. The pouch-type secondary battery manufacturing method according to claim 2,
**characterized in that** the suction step is performed after pressurization is started through a sealing block in the sealing step.

4. The pouch-type secondary battery manufacturing method according to claim 3,
**characterized in that** the suction step is performed before the pressurization is completed.

5. The pouch-type secondary battery manufacturing method according to claim 3,
**characterized in that** the suction step is performed until a predetermined time after the pressurization is completed.

6. The pouch-type secondary battery manufacturing method according to claim 2,
**characterized in that** the suction step through the suction nozzle is excluded in a lead region of the pouch where a lead of the electrode assembly is seated.

7. The pouch-type secondary battery manufacturing method according to claim 6,
**characterized in that** the suction step is performed in the temporary attachment region located on both sides of the lead region.

8. The pouch-type secondary battery manufacturing method according to claim 1,
**characterized in that** the up-and-down gap is formed by a step portion formed with a sinking depth smaller than that of the accommodation portion in the temporary attachment region to have a step with the accommodation portion.

9. The pouch-type secondary battery manufacturing method according to claim 7,
**characterized in that** in the forming step, the step portion is formed together with the accommodation portion.

10. The pouch-type secondary battery manufacturing method according to claim 9,
**characterized in that** in the forming step, the accommodation portion and the step portion are formed simultaneously.

11. The pouch-type secondary battery manufacturing method according to claim 8,
**characterized in that** the step portion is formed in a lead region of the pouch where a lead of the electrode assembly is seated.

12. The pouch-type secondary battery manufacturing method according to claim 8,
**characterized in that** the step portion is formed in the temporary attachment region located on both sides of a lead region.

13. A pouch-type secondary battery, **characterized in that** the pouch-type secondary battery comprises:
a pouch case having a metal layer, and an insulating coating layer formed on the lower and upper surfaces of the metal layer, and having an accommodation portion in which some regions are sunken; and
an electrode assembly seated in the accommodation portion, and having a lead exposed to the outside of the pouch case when a sealing portion is formed by heat fusion by pressurizing a sealing region of the pouch cases overlapped up and down, and
when the sealing portion is formed, formation of a temporary attachment portion is limited by an up-and-down gap formed between the pouch cases overlapped up and down in a temporary attachment region located between the edge of the accommodation portion and the sealing region.

14. The pouch-type secondary battery according to claim 13,
**characterized in that** the up-and-down gap is formed by sucking an upper pouch case to the upside and sucking a lower pouch case to the downside in the temporary attachment region through suction nozzles.

15. The pouch-type secondary battery according to claim 14,
**characterized in that** in a lead region of the pouch case where the lead is seated, the suction through the suction nozzle is excluded.

16. The pouch-type secondary battery according to claim 15,
**characterized in that** the suction through the suction nozzle is performed in the temporary attachment region located on both sides of the lead region.

17. The pouch-type secondary battery according to claim 13,
**characterized in that** the up-and-down gap is formed by a step portion formed with a sinking depth smaller than that of the accommodation portion in the temporary attachment region to have a step with the accommodation portion.

18. The pouch-type secondary battery according to claim 17,
**characterized in that** the step portion is provided in a lead region of the pouch case where the lead of the electrode assembly is seated.

19. The pouch-type secondary battery according to claim 17,
**characterized in that** the step portion is formed in the temporary attachment region located on both sides of a lead region of the pouch case where the lead of the electrode assembly is seated.

20. The pouch-type secondary battery according to claim 17,
**characterized in that** in a lead region of the pouch case where the lead of the electrode assembly is seated, the formation of the step portion is excluded.
